# EUROPEAN PATENT APPLICATION

(11) **EP 4 478 203 A1**
(43) Date of publication of application: **18.12.2024**
(21) Application number: 23179366.2
(22) Date of filing: 14.06.2023
(51) Int. Cl.: G06F 12/109, G06F 9/50, G06F 15/167, G06F 15/78, G06F 12/0815, G06F 12/1009, G06F 12/0813, G06F 12/08

(54) **A METHOD OF MANAGING MEMORY IN A HIGH-PERFORMANCE COMPUTING SYSTEM**

(71) Applicant: Sipearl, 78600 Maisons-Laffitte (FR)
(72) Inventor: DOLBEAU, Romain, 35700 RENNES (FR)
(74) Representative: Gabriel, Franck

(57) **Abstract**

A method of managing memories in a high-performance computing system (HPC) comprising multiple computational cores (S1, S2), each core (S1, S2) being efficiently connected to a volatile memory (M1, M2), each core (S1, S2) being connected directly or indirectly together through a cache coherent interconnect (INCO), at least a first core (S1) running a first thread (T1) and a second core (S2) running a second thread (T2), at least both first and second threads (T1, T2) requiring an access to a particular memory object (DP), wherein the method comprises :
- storing said memory object (DP) in the first memory (M1) of the first core (S1), and storing a first physical address of said memory object (DP) in a first page table (PT1) of the first core (S1);
- copying and storing (MMC, MMC12) a multi-mapped copy (DPc) of said memory object (DP) in the second memory (M2) of the second core (S2), and storing a second physical address of said multi-mapped copy (DPc) in a second page table (PT2) of the second core (S2) such that the second thread (T2) has a direct access to an exact copy of the required particular memory object (DP), the required particular memory object (DP) forming a shared memory object.

## Description

### TECHNICAL FIELD

The invention relates to a method of managing memory in a high-performance computing system. A high-performance computing system is able to process data and to perform complex calculations at high speeds, namely, today, at least tera (10¹²) calculations per second for a single physical package, a high-performance computing system comprising at least one package. As an example, supercomputers are typically assembled by networking a defined number of high-performance computing systems, said number ranging from a few to thousands. A high-performance computing system comprises several computational cores and several memories, and is generally characterized by a software homogeneity (i.e. all the computational cores are interchangeable with respect to software code execution) and by a memories performance heterogeneity (i.e. the relationship between the computational cores and the memories are not identical with regard to the memory performance, e.g. latency, transfer rate, bandwidth).

### BACKGROUND

Virtual memory has been used to separate the virtual address and/or virtual space of a memory object (e.g. a program code, a piece of data, a static library, a dynamic library), as referenced by the software, from the physical address and/or physical space of this same memory object, as referenced by the hardware.

A first aspect of using virtual memory is related to the true/actual memory space. It enables the use of more virtual space than is physically available. Virtual memory for which a corresponding physical memory is not directly available can be "paged" (the word "swapped" may also be used) out to a larger, cheaper storage area when the corresponding virtual memory is not in use.

A second aspect of using virtual memory is related to memory security, more precisely the integrity of the memory objects stored in the memory. Virtual memory enables defining different virtual spaces for different processes, for different threads and/or parts of the operating system. This results in insulating the defined virtual spaces from each other. For example, one process cannot reference or access the virtual space reserved to another process. As another example, a part of the operating system cannot directly reference or access the virtual space reserved to another part of the operating system or to non-operating system process As a further example, threads from the same process can access the same virtual space, thus implicitly sharing the data between such threads.

A third aspect of using virtual memory is related to memory sharing. In order to compensate for the above-mentioned memory security aspect, a mechanism may explicitly map multiple virtual addresses and/or virtual spaces to the same physical address and/or physical space, thus enabling sharing of memory objects between processes, threads and/or parts of the operating system.

Over the years, the importance of the space aspect has diminished because memory became cheaper, and the importance of security aspect and sharing aspect has grown.

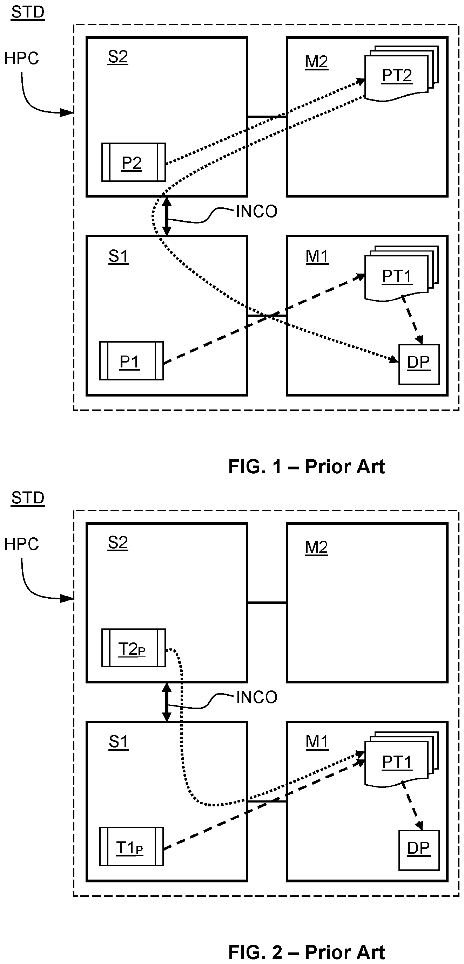

FIG. 1 schematically illustrates a standard architecture STD of a high-performance computing system HPC wherein each computational core S1, respectively S2 has its own memory M1, respectively M2. Further, FIG. 1 schematically illustrates a standard way of managing a memory object, for example a piece of data DP in the memory area. In the particular example of FIG. 1, a first memory M1 is assigned to the first core S1 and a second memory M2 is assigned to the second core S2. The first core S1 is connected to the second core S2 by a cache coherent interconnect INCO. A first process P1 is running on the first core S1. A second process P2 is running on the second core S2. The piece of data DP is stored in the first memory M1 of the first core S1. The physical address of the piece of data DP in the first memory M1 is stored in the first page table PT1 of the first core S1 and in the second page table PT2 of the second core S2. In this example, both processes P1 and P2 are using the same piece of data DP (i.e. this piece of data is a shared memory object). Each process has said piece of data referenced by a corresponding virtual address in the respective page table of the corresponding core, but only one process has an effective access to the physical memory area storing said piece of data. As a consequence, the first process P1 has a fast access to the piece of data DP because the first core S1 has a direct access to the first memory M1. To the contrary, the second process P2 has a slow access to the piece of data DP because the second core S2 has an indirect access to the first memory M1 via the first core S1 and the cache coherent interconnect INCO.

FIG. 2 illustrates the same architecture as in FIG. 1, but wherein a first and second threads T1_{P} and T2_{P} are run instead of first and second processes P1 and P2 by the first and second cores S1 and S2, respectively. A thread is understood as a component of a process. A process may comprise multiple threads. In the present example, a single process P comprises two threads T1_{P} and T2_{P}, each thread being run by different cores S1 and S2. In this case, the first page table PT1 is common to the first and second threads T1_{P} and T2_{P} and has to be stored in one of the memories, for example the first memory M1 assigned to the first core S1. It can be remarked that in this case, the page table PT1 itself is shared data between the first and second threads T1_{P} and T2_{P}, and that the second thread T2_{P} has a slow access to the piece of data DP. Thus, in case of the running of threads T1_{P} and T2p on different cores S1 and S2, a similar performance issue occurs as when processes P1 and P2 are run on different cores S1 and S2.

Thus, such a standard way of managing the memory space of a high-performance computing system HPC has technical limitations. In particular, it results in a calculation performance issue when a physical memory area is slow to access by some of the computational cores. Thus, implementing the standard way of managing the memory space influences the execution time of computations on the cores that are not directly linked to the memory containing the required shared memory object.

### SUMMARY OF THE DISCLOSURE

It is an object of the invention to propose a method of managing memory in a high-performance computing system that overcomes one or more of the limitations of the existing methods, in particular that improves the speed of access to shared memory objects, thus improving calculation performance of high-performance computing systems.

According to one aspect, there is provided a method of managing memories in a high-performance computing system comprising multiple computational cores, each core being efficiently connected to a volatile memory, each core being connected directly or indirectly together through a cache coherent interconnect, at least a first core running a first thread and a second core running a second thread, at least both first and second threads requiring an access to a particular memory object, wherein the method comprises :
- storing said memory object in the first memory of the first core, and storing a first physical address of said memory object in a first page table of the first core;
- copying and storing a multi-mapped copy of said memory object in the second memory of the second core, and storing a second physical address of said multi-mapped copy in a second page table of the second core such that the second thread has a direct access to an exact copy of the required particular memory object, the required particular memory object forming a shared memory object.

The volatile memory may be a double data rate memory, a high bandwidth memory or a hybrid memory cube

The memory object may be a program code, a piece of data, or a static library, or a dynamic library.

The memory object may be read-only.

Anyone of the thread may be a component of a determined process, or may be a component of at least two independent processes.

The method of managing memory may further comprise comparing an absolute number of writes to a defined maximum number of writes, or comparing a rate of writes to a defined maximum rate of writes, or comparing a relative ratio of writes to reads to a defined maximum relative ratio of writes to reads.

The method of managing memory, wherein, in case either the absolute number of writes is greater than the defined maximum number of writes, or the rate of writes is greater than the defined maximum rate of writes, or the relative ratio of writes to reads is greater than the defined maximum relative ratio of writes to reads, the method may further comprise removing the multi-mapped copy of said memory object in the second memory of the second core for any further write operation.

The method of managing memory, wherein, in case either the absolute number of writes is less than the defined maximum number of writes, or the rate of writes is less than the defined maximum rate of writes, or the relative ratio of writes to reads is less than the defined maximum relative ratio of writes to reads, the method may further comprise :
- retrieving the memory object from a secondary storage and allocating all needed physical space for various copies of said memory object in said memories according to a paging mechanism;
- marking all copies of said memory object in the corresponding memories as read-only status;
- in case a considered thread is trying to write to the copy in the memory accessible to said thread, marking all the other copies as inaccessible, and marking the copy of said thread as writable;
- returning control to said thread so as to perform a write operation to the copy in the memory accessible to said thread such as to define a last updated copy of said memory object; and
- performing an updating operation by copying said memory object from the last updated copy to all the others copies, and returning all the copies to a read-only status.
- in case any other thread tries accessing a copy marked as inaccessible, temporarily suspending said other thread during said write operation, and subsequently resuming and completing access of the temporarily suspended thread to the updated copy when all the copies are returned to the read-only status.

The above steps may be performed by an operating system of the high-performance computing system.

According to a further aspect, there is provided a computer program product comprising program code means for performing the steps of the method of managing memory of the invention when said program code is executed by an operating system of a high-performance computing system.

According to another aspect, there is provided a memory management unit integrated in a high-performance computing system comprising a logical circuit for performing the steps of the method of managing memory of the invention.

Such a multi-mapped memory scheme is advantageous because it ensures that the physical memory backing is always optimal whatever the specific use of the shared memory object by the high-performance computing system. Indeed, some shared memory objects do not have any specific requirements in terms of space, latency, reliability, etc... and can be safely mapped just once in the most readily available physical area. Further, some shared memory objects may have specific requirements in terms of space, latency, reliability, etc..., but only one use case, thus requiring a single specific physical area. Furthermore, some shared memory objects may have specific requirements in terms of space, latency, reliability, etc..., and these requirements change depending on the use case. The multi-mapped memory scheme is adapted to cover a great number of all these use cases.

Other advantages will become apparent from the hereinafter description of the invention.

### DESCRIPTION OF THE DRAWINGS

The present invention is illustrated by way of examples and not limited to the accompanying drawings, in which like references indicate similar elements:
- FIG. 1 and FIG. 2 schematically illustrate a standard way of managing a memory object in the memory space of a standard architecture STD of a high-performance computing system HPC according to the prior art;
- FIG. 3 schematically illustrates a method of managing a memory object in the memory space of a high-performance computing system HPC of the invention according to a particular example of application;
- FIG. 4 schematically illustrates another example of application of the method of managing the memory space of the invention in a high-performance computing system HPC comprising four compute dies;
- FIG. 5 schematically illustrates a further example of application of the method of managing the memory space of the invention in a high-performance computing system HPC comprising eight compute dies in a multi-packages arrangement; and
- FIG. 6 and FIG. 7 are block diagrams schematically illustrating the multi-mapped memory scheme MMC implemented by a software module of the operating system.

### DETAILED DESCRIPTION OF THE INVENTION

The method of managing the memory space of the high-performance computing system HPC of the invention is a multi-mapped memory scheme MMC that is used to manage a shared memory object. Such a shared memory object may be a program code, but also a piece of data, a static library, a dynamic library, etc... that is used by more than one thread or process run by multiple computational cores of a high-performance computing system HPC. The shared memory object may be routinely shared by multiple threads or processes, at least for a read-only operation. The memory management method of the invention consists in backing a single virtual address by multiple physical areas. This set of physical areas may also be referenced by multiple virtual addresses.

In the following, the terminology "thread" used should also include the terminology "process" in the sense that a thread is a component of a process. A process may contain one or multiple threads.

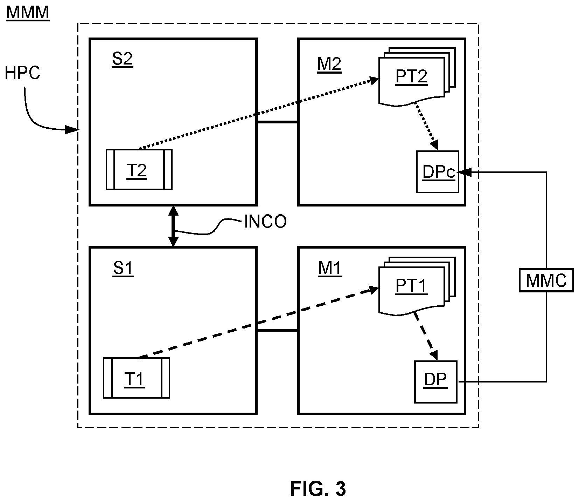

FIG. 3 schematically illustrates a particular example of application of the method of managing the memory space of the high-performance computing system HPC of the invention. This example relates to the management of a shared memory object (e.g. a piece of data DP) and spatial location of said object. In the example of FIG. 3, a first memory M1 is assigned to the first core S1 (the reference S1 may also represent a first group of multiple computational cores) and a second memory M2 is assigned to the second core S2 (the reference S2 may also represent a second group of multiple computational cores). These memories associated to the cores are volatile memories, for example a double data rate memory DDR, a high bandwidth memory HBM or hybrid memory cube HMC, or other types of memory (e.g. Low-Power Double Data Rate LPDDR, etc...). The first core S1 is connected to the second core S2 by a cache coherent interconnect INCO. A first thread T1 is running on the first core S1. A second thread T2 is running on the second core S2. A piece of data DP is stored in the first memory M1 of the first core S1. The physical address of the piece of data DP in the first memory M1 is stored in the first page table PT1 of the first core S1. A multi-mapped copy DPc of the piece of data DP is stored in the second memory M2 of the second core S2 (multi-mapped memory scheme MMC). The physical address of said copy in the second memory M2 is stored in the second page table PT2 of the second core S2. Thus, the first thread T1 and the second thread T2 have both a fast access to a corresponding piece of data because the first core S1 and the second core S2 have both a direct access to the respective first memory M1 and second memory M2. As a consequence, the execution time of computation threads T1 and T2 on the respective cores S1 and S2 are the fastest possible because each core is directly linked to the associated memory containing the piece of data DP, DPc required by the corresponding thread T1, T2. This scheme can be generalized to multiple computational cores beyond two cores, the operating system of the high-performance computing system HPC can then multi-map the shared memory object (i.e. the piece of data DP in the present example) in every and each memory area associated with a respective computational core, thus ensuring that each thread running on a computational core will have a locally accessible copy. As a consequence, calculation performance will be substantially similar among the various computational cores wherever a thread is executed.

Thus, the multi-mapped memory management method of the invention as a counterpart of the tradeoff the fact that it results in the consumption of physical space beyond the minimum necessary to support a given amount of virtual memory, it enables improving the calculation performance of the high-performance computing system HPC.

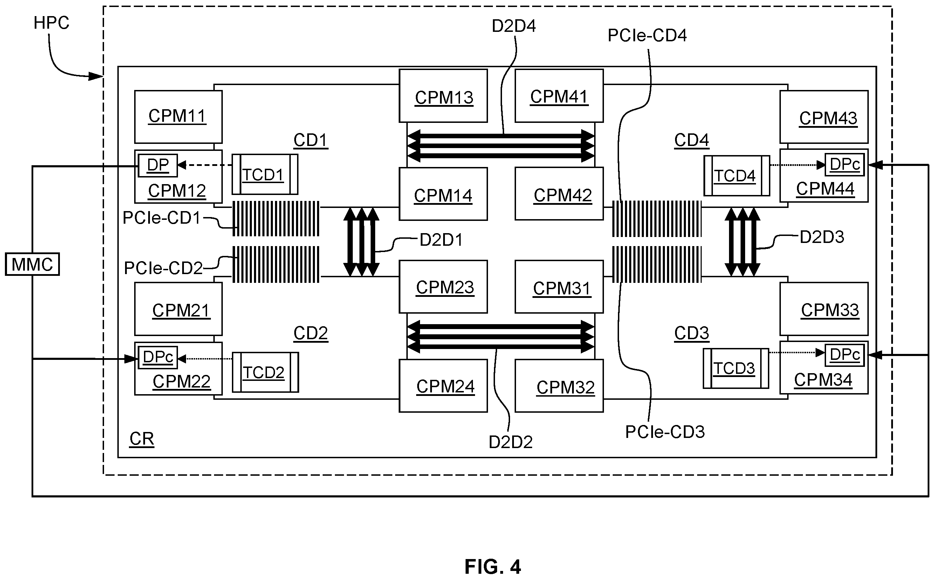

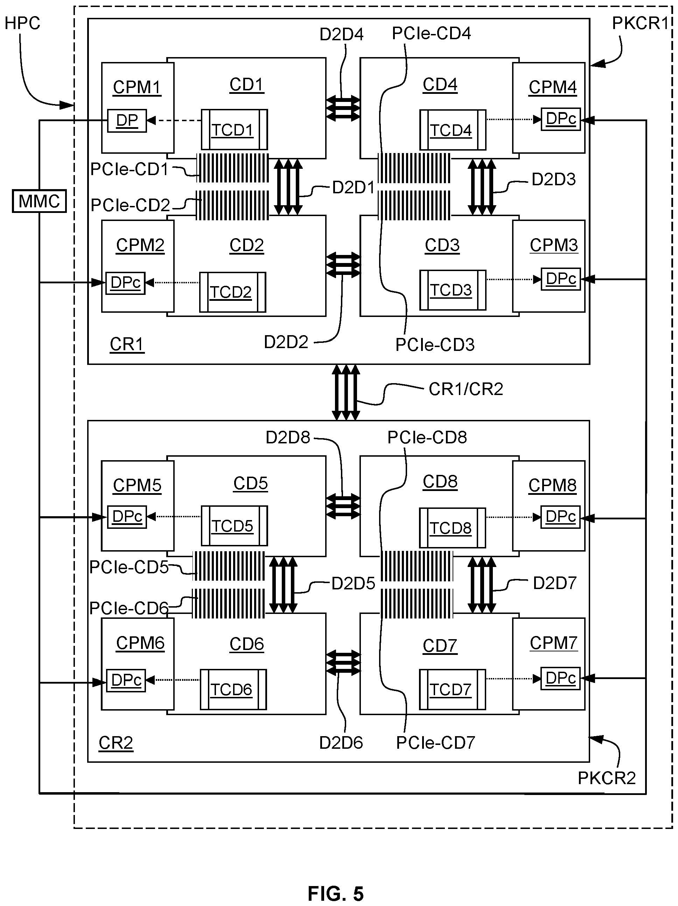

FIG. 4 schematically illustrates another example of application of the method of managing the memory space of a high-performance computing system HPC comprising four compute dies according to the invention. FIG. 5 schematically illustrates a further example of application of the method of managing the memory space of a high-performance computing system HPC comprising eight compute dies (CD1 to CD8) in a multi-packages arrangement (PKGCR1, PKGCR2) according to the invention. A die means a part of semiconducting material on which a given functional circuit is fabricated in order to form an integrated circuit, also called a chip. A high-performance computing system HPC may include a variable number of physical packages each with a variable number of dies or chips, like multi-chips modules MCM and multi-chips packages.

The high-performance computing system HPC comprises a plurality of chips having a plurality of computational groups, each computational group comprises at least one computational core (i.e. a computational group of cores comprises one or more computational core(s)) and a computational memory. All the computational groups are used as a computational resource CR.

In the example of FIG. 4, the computational resource CR comprises four compute dies constituting a first computational group of at least one core CD1 being coupled with multiple computational memory CPM11, CPM12, CPM13, CPM14, a second computational group of at least one core CD2 being coupled with multiple computational memory CPM21, CPM22, CPM23, CPM24, a third computational group of at least one core CD3 being coupled with multiple computational memory CPM31, CPM32, CPM33, CPM34 and a fourth computational group of at least one core CD4 being coupled with multiple computational memory CPM41, CPM42, CPM43, CPM44, each having a peripheral component interconnect PCI express PCIe-CD1, PCIe-CD2, PCIe-CD3 and PCIe-CD4 respectively and multiple die-to-die connection D2D1, D2D2, D2D3 and D2D4. Each peripheral component interconnect PCI express PCIe-CD1, PCIe-CD2, PCIe-CD3 and PCIe-CD4 PCI express may for example comprise forty-eight lanes. The first die-to-die connection D2D1 couples the first computational group of at least one core CD1 to the second computational group of at least one core CD2. The second die-to-die connection D2D2 couples the second computational group of at least one core CD2 to the third computational group of at least one core CD3. The third die-to-die connection D2D3 couples the third computational group of at least one core CD3 to the fourth computational group of at least one core CD4. The fourth die-to-die connection D2D4 couples the first computational group of at least one core CD1 to the fourth computational group of at least one core CD4.

A first thread TCD1 is running on the first computational group of at least one core CD1. A second thread TCD2 is running on the second computational group of at least one core CD2. A third thread TCD3 is running on the third computational group of at least one core CD3. A fourth thread TCD4 is running on the fourth computational group of at least one core CD4. A piece of data DP is stored in the memory CPM12 of the first core CD1. The physical address of the piece of data DP in the memory CPM12 is stored in a corresponding page table (not represented for sake of clarity, reference is made to a similar representation as the one depicted in FIG. 3) of the first core CD1. A first, second and third multi-mapped copy DPc of the piece of data DP is stored in the memory CPM22 of the core CD2, the memory CPM34 of the core CD3 and the memory CPM44 of the core CD4 (multi-mapped memory scheme MMC), respectively. The physical address of each copy in the corresponding memory is stored in the corresponding page table of the corresponding core. Thus, the first thread TCD1, the second thread TCD2, the third thread TCD3 and the fourth thread TCD4 have all a fast access to a corresponding piece of data because all these cores CD1, CD2, CD3, CD4 have all a direct access to the respective corresponding memories CPM12, CPM22, CPM34, CPM44, respectively. As a consequence, the execution time of computation threads TCD1, TCD2, TCD3 and TCD4 on the respective cores CD1, CD2, CD3 and CD4 are the fastest possible because each core is directly linked to the associated memory containing the piece of data DP, DPc required by the corresponding thread TCD1, TCD2, TCD3 and TCD4.

In the example of FIG. 5, a first package PKCR1 constitutes a first computational resource CR1. A second package PKCR2 constitutes a second computational resource CR2. Together, the first computational resource CR1 and the second computational resource CR2 form the computational resource of the high-performance computing system HPC. The first computational resource CR1 of the first package PKCR1 is connected to the second computational resource CR2 of the second package PKCR2 by means of a first inter-package cache-coherent link CR1/CR2. A multi-packages arrangement is a way to avoid issues regarding thermal dissipation, calculation performance enhancement, cost increase, etc... For example, a multi-packages arrangement enables avoiding any technical limitation related to the capacity of the high-performance system to dissipate heat generated during high-performance system operation, or enhancing the calculation performance of a super computer without increasing a size of a single package arrangement, etc...

The first computational resource CR1 comprises four compute dies constituting a first computational group of at least one core CD1 being coupled with computational memory CPM1, a second computational group of at least one core CD2 being coupled with computational memory CPM2, a third computational group of at least one core CD3 being coupled with computational memory CPM3 and a fourth computational group of at least one core CD4 being coupled with computational memory CPM4, each having a peripheral component interconnect PCI express PCIe-CD1, PCIe-CD2, PCIe-CD3 and PCIe-CD4 respectively and multiple die-to-die connection D2D1, D2D2, D2D3 and D2D4. The first die-to-die connection D2D1 couples the first computational group of at least one core CD1 to the second computational group of at least one core CD2. The second die-to-die connection D2D2 couples the second computational group of at least one core CD2 to the third computational group of at least one core CD3. The third die-to-die connection D2D3 couples the third computational group of at least one core CD3 to the fourth computational group of at least one core CD4. The fourth die-to-die connection D2D4 couples the first computational group of at least one core CD1 to the fourth computational group of at least one core CD4.

The second computational resource CR2 comprises four compute dies constituting a fifth computational group of at least one core CD5 being coupled with computational memory CPM5, a sixth computational group of at least one core CD6 being coupled with computational memory CPM6, a seventh computational group of at least one core CD7 being coupled with computational memory CPM7 and a eighth computational group of at least one core CD8 being coupled with computational memory CPM8, each having a peripheral component interconnect PCI express PCIe-CD5, PCIe-CD6, PCIe-CD7 and PCIe-CD8 respectively and multiple die-to-die connection D2D5, D2D6, D2D7 and D2D8. The fifth die-to-die connection D2D5 couples the fifth computational group of at least one core CD5 to the sixth computational group of at least one core CD6. The sixth die-to-die connection D2D6 couples the sixth computational group of at least one core CD6 to the seventh computational group of at least one core CD7. The seventh die-to-die connection D2D7 couples the seventh computational group of at least one core CD7 to the eighth computational group of at least one core CD8. The eight die-to-die connection D2D8 couples the fifth computational group of at least one core CD5 to the eighth computational group of at least one core CD8.

A first TCD1, a second TCD2, a third TCD3 and a fourth TCD4 threads are respectively running on the first CD1, second CD2, third CD3 and fourth CD4 computational group of at least one cores of the first package PKCR1. A fifth TCD5, a sixth TCD6, a seventh TCD7 and an eighth TCD8 threads are respectively running on the fifth CD5, sixth CD6, seventh CD7 and eighth CD8 computational group of at least one cores of the second package PKCR2. A piece of data DP is stored in the memory CPM1 of the first core CD1. The physical address of the piece of data DP in the memory CPM1 is stored in a corresponding page table (not represented for sake of clarity, reference is made to a similar representation as the one depicted in FIG. 3) of the first core CD1. A first, second, third, fourth, fifth, sixth and seventh multi-mapped copy DPc of the piece of data DP are respectively stored in the memories CPM2, CPM3, CPM4, CPM5, CPM6, CPM7 and CPM8 of the respective cores CD2, CD3, CD4, CD5, CD6, CD7 and CD8 (multi-mapped memory scheme MMC). The physical address of each copy in the corresponding memory is stored in the corresponding page table of the corresponding core. Thus, the first thread TCD1, the second thread TCD2, the third thread TCD3, the fourth thread TCD4, the fifth thread TCD5, the sixth thread TCD6, the seventh thread TCD7 and the eighth thread TCD8 have all a fast access to a corresponding piece of data because all these cores CD1, CD2, CD3, CD4, CD5, CD6, CD7 and CD8, whatever the package concerned, have all a direct access to the respective corresponding memories CPM1, CPM2, CPM3, CPM4, CPM5, CPM6, CPM7, CPM8, respectively. As a consequence, the execution time of computation threads TCD1, TCD2, TCD3, TCD4, TCD5, TCD6, TCD7 and TCD8 on the respective cores CD1, CD2, CD3, CD4, CD5, CD6, CD7 and CD8 are the fastest possible because each core is directly linked to the associated memory containing the piece of data DP, DPc required by the corresponding thread TCD1, TCD2, TCD3, TCD4, TCD5, TCD6, TCD7 and TCD8.

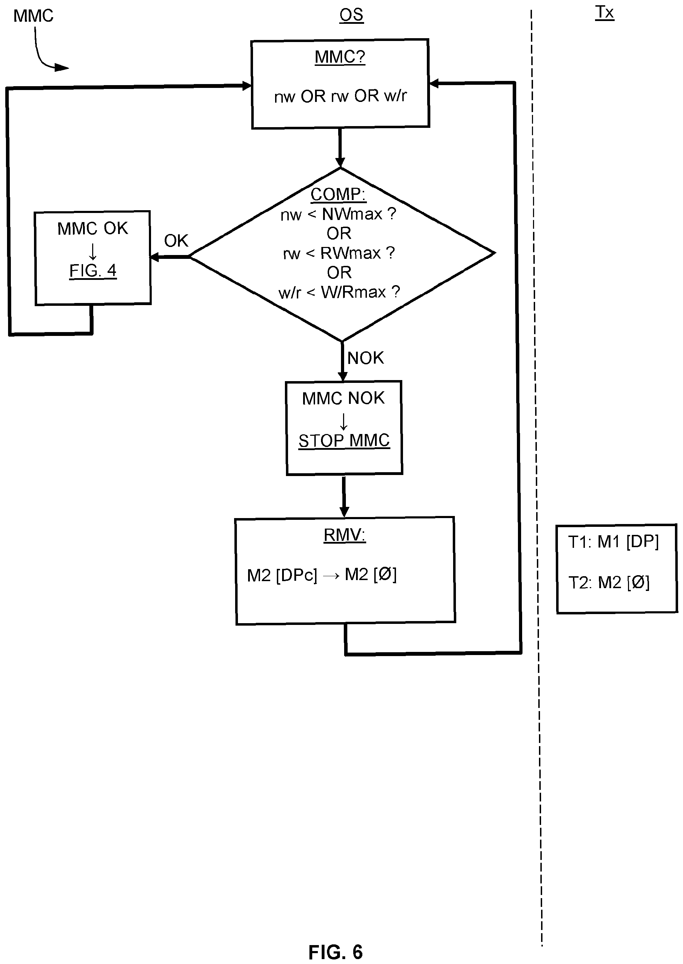

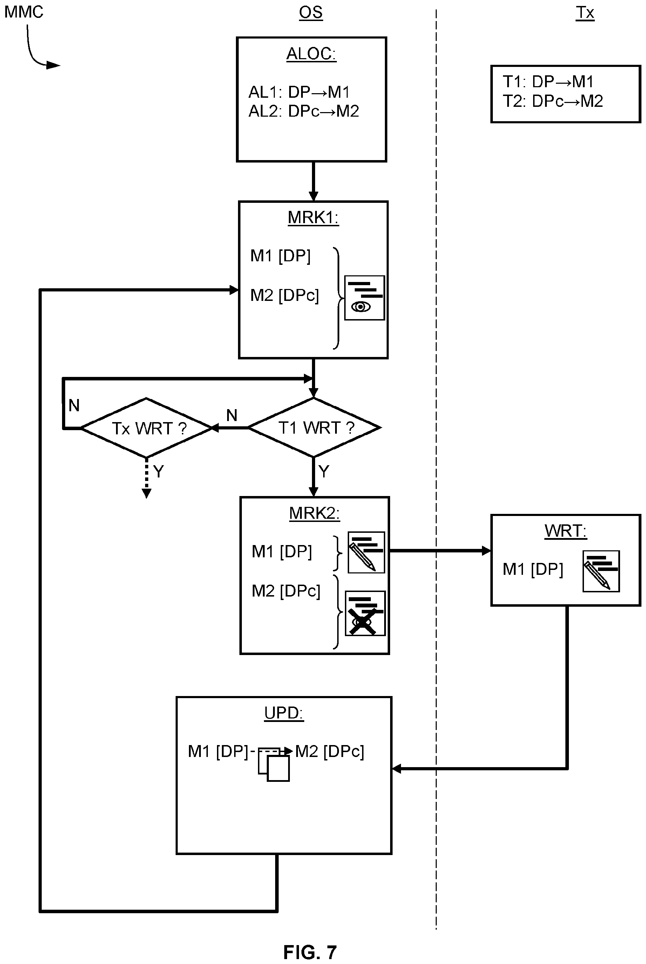

The multi-mapped memory scheme MMC may be implemented by a software module. Typically, such a software module may be implemented at the level of the operating system as illustrated in FIG. 6 and FIG. 7.

In the operating system OS, the management of memory is performed by memory paging wherein memory objects are stored and retrieved from a secondary storage (e.g. a hard disk drive or a solid state drive) for use in the main memory of the computational core (e.g. a volatile memory associated with a respective core). The operating system OS retrieves memory objects from the secondary storage in same-size blocks called pages. Each computational core is efficiently connected to a corresponding volatile memory, in the sense that all computational cores have access to all the volatile memories but each core has privileged and efficient access to a specific volatile memory (i.e. with lower latency, higher throughput and bandwidth to this specific volatile memory compared to all the other volatile memories associated to the other computational cores).

The operating system OS takes a dynamic decision whether the multi-mapped memory scheme MMC should be implemented or not (step MMC?). The dynamic decision is based on a cost/benefit ratio, the benefit being the gain from using a faster copy for reads, the cost being the overhead of handling a copy-on-write thread. The absolute numbers to use are dependent on the specifics details of the high-performance computing system (i.e. latency and bandwidth of various subsystems), and should be tuned on a system-by-system basis. The decision could be based on:
- the absolute number of writes (i.e. if writes are very expensive, even a few would justify avoiding the multi-mapped memory scheme MMC); or
- the rate of writes (i.e. number of writes per unit of time, if small enough then the multi-mapped memory scheme MMC would still be worthwhile); or
- the relative ratio of writes to reads (i.e. the cost of each writes vs. the benefit of each load).

When taking the dynamic decision, either the absolute number of writes nw is compared to a defined maximum number of writes NWmax (step COMP: nw < NWmax ?), or the rate of writes rw is compared to a defined maximum rate of writes RWmax (step COMP: rw < RWmax ?), or the relative ratio of writes to reads w/r is compared to a defined maximum relative ratio of writes to reads W/Rmax (step COMP: w/r < W/Rmax ?).

When, either the absolute number of writes nw is greater than the defined maximum number of writes NWmax (step nw < NWmax ?), or the rate of writes rw is greater than the defined maximum rate of writes RWmax (step rw < RWmax ?), or the relative ratio of writes to reads w/r is greater than the defined maximum relative ratio of writes to reads W/Rmax (step w/r < W/Rmax ?), meaning that the corresponding comparison is not true (step MMC NOK), then any further write operation will result in disabling the multi-mapped memory scheme MMC (step MMC NOK → STOP MMC). The operating system OS performs a removing operation (step RMV) by removing all extra copies in the memories, namely the memory object DPc is removed from memory M2 (step M2 [DPc] → M2 [Ø]). As a result, the memory object DP is now only stored in the memory M1.

When, either the absolute number of writes nw is less than (or equal to) the defined maximum number of writes NWmax (step nw < NWmax ?), or the rate of writes rw is less than (or equal to) the defined maximum rate of writes RWmax (step rw < RWmax ?), or the relative ratio of writes to reads w/r is less than (or equal to) the defined maximum relative ratio of writes to reads W/Rmax (step w/r < W/Rmax ?), meaning that the corresponding comparison is true (step MMC OK), then any further write operation will still be handled according to the multi-mapped memory scheme MMC (MMC OK) and the thread as depicted in FIG. 7 is implemented. The operating system allocates (step ALOC) all the needed physical space (AL1, AL2) for the various copies (i.e. copies in other memories M1, M2) when the page is first touched.

Concerning a write operation, this may be handled by a scheme similar to paging. All copies (memory object DP in memory M1, DPc in M2) are marked as read-only (step MRK1). If a thread (e.g. T1) tries to write (step T1 WRT?) to the copy in the memory accessible to said thread (e.g. in FIG. 3, the first thread T1 is accessing to a piece of data DP in first memory M1), this is an unauthorized operation (i.e. the memory being read-only implies that write is illegal). As a consequence, the operating system OS recovers control by marking (step MRK2) all the other copies as inaccessible (DPc in M2), marking the copy of the considered thread as writable (DP in M1), and returning the control to the considered thread so that the write operation (step WRT) can be performed. Subsequently, the operating system OS performs an updating operation (step UPD) by copying the memory object (DP in M1) from the last updated copy to all the others copies (DPc in M2), and returning all the copies to a read-only status (step MRK1). If another thread (step Tx WRT?) tries to access a different copy, the same steps (MRK2, WRT and UPD) are repeated for this other thread. Similarly, if the same thread, has been remapped to another copy for some reason, in this case, the operating system also performs an updating operation by copying the data from the last updated copy to all the others copies, and returning all the copies to a read-only status. It is to be noted that, during said write operation (step WRT), in case any other thread tries accessing a copy marked as inaccessible, then said other thread is temporarily suspended. Subsequently, when the write operation (step WRT) is finished, meaning that all the copies are returned to the read-only status (step MRK1), the access of the temporarily suspended thread to the updated copy is resumed and completed.

The multi-mapped memory scheme MMC implemented by a software module is efficient for read-only or read-mostly pages, but less efficient for often written pages. Alternatively, the copy steps of the updating operation ensuring that all copies are up-to-date may be performed as a background thread. As a further alternative, specific hardware resources such as a direct memory access DMA engine may be used to perform the copy steps of the updating operation.

Alternatively, the multi-mapped memory scheme MMC may be implemented by a hardware module. For example, the hardware module may be a memory management unit, like a memory controller (i.e. a cache controller), generally used to perform cache coherence in multiprocessor system, that has been modified and programmed to implement the hereinbefore described multi-mapped memory scheme MMC. The cache controller is used to maintain the uniformity of shared memory objects that are stored in the multiple local computational memories. Thus, the computational cores always use copies of shared memory objects that are coherent with one another. The multi-mapped memory scheme MMC implemented by a hardware module is efficient to regular or frequent support write-operation.

Which copy is seen by a thread can simply be handled by appropriately updating the thread' page table. In a typical implementation, this page table would depend on where the thread is currently executing, to ensure the copies in use are always meeting the requirements of the thread.

The high-performance computing system of the present invention finds applications in various industry domains, for example processors engineering and manufacturing industry, computer workstations industry, supercomputing industry, automotive industry (e.g. for autonomous driving, connected car), etc...

It should be appreciated that embodiments of the high-performance computing system of the present invention are not limited to the embodiments showing two computational cores (i.e. or two compute dies), the invention being also applicable whatever the configuration of the HPC system, namely other quantity of cores or compute dies, for example 64 compute cores on a single die, 128 compute cores spread on 4 computes dies, etc...

It should be appreciated that embodiments of the high-performance computing system of the present invention are not limited to the embodiments showing one memory per computational cores. Indeed, the invention is also applicable whatever the configuration of the HPC system, namely other quantity of memories in relation to the computational cores, the HPC system comprising at least two memories, and a performance imbalance depending on which computational core accesses which memory. Further, the terminology "a first/second computational core" is not limited to a single computational core as it may also be understood as including multiple computational cores associated in a group, thus "a first computational core" may be understood as "a first group of computational cores", and "a second computational core" may be understood as "a second group of computational cores".

## Claims

1. A method of managing memories in a high-performance computing system (HPC) comprising multiple computational cores (S1, S2), each core (S1, S2) being efficiently connected to a volatile memory (M1, M2), each core (S1, S2) being connected directly or indirectly together through a cache coherent interconnect (INCO), at least a first core (S1) running a first thread (T1) and a second core (S2) running a second thread (T2), at least both first and second threads (T1, T2) requiring an access to a particular memory object (DP), wherein the method comprises :
- storing said memory object (DP) in the first memory (M1) of the first core (S1), and storing a first physical address of said memory object (DP) in a first page table (PT1) of the first core (S1);
- copying and storing (MMC) a multi-mapped copy (DPc) of said memory object (DP) in the second memory (M2) of the second core (S2), and storing a second physical address of said multi-mapped copy (DPc) in a second page table (PT2) of the second core (S2) such that the second thread (T2) has a direct access to an exact copy of the required particular memory object (DP), the required particular memory object (DP) forming a shared memory object.

2. The method of managing memory of claim 1, wherein the volatile memory (M1, M2) is a double data rate memory, a high bandwidth memory or a hybrid memory cube

3. The method of managing memory according to anyone of claims 1 to 2, wherein the memory object (DP, DPc) is a program code, or a piece of data, or a static library, or a dynamic library.

4. The method of managing memory according to anyone of claims 1 to 3, wherein the memory object (DP, DPc) is read-only.

5. The method of managing memory according to anyone of claims 1 to 4, wherein anyone of the thread (T1, T2) is a component of a determined process, or a component of at least two independent processes.

6. The method of managing memory according to anyone of claims 1 to 5, further comprising comparing an absolute number of writes (nw) to a defined maximum number of writes (NWmax), or comparing a rate of writes (rw) to a defined maximum rate of writes (RWmax), or comparing a relative ratio of writes to reads (w/r) to a defined maximum relative ratio of writes to reads (W/Rmax).

7. The method of managing memory of claim 6, wherein, in case either the absolute number of writes (nw) is greater than the defined maximum number of writes (NWmax), or the rate of writes (rw) is greater than the defined maximum rate of writes (RWmax), or the relative ratio of writes to reads (w/r) is greater than the defined maximum relative ratio of writes to reads (W/Rmax), the method further comprises removing the multi-mapped copy (DPc) of said memory object (DP) in the second memory (M2) of the second core (S2) for any further write operation.

8. The method of managing memory of claim 6, wherein, in case either the absolute number of writes (nw) is less than the defined maximum number of writes (NWmax), or the rate of writes (rw) is less than the defined maximum rate of writes (RWmax), or the relative ratio of writes to reads (w/r) is less than the defined maximum relative ratio of writes to reads (W/Rmax), the method further comprises :
- retrieving the memory object from a secondary storage and allocating (ALOC) all needed physical space (AL1, AL2) for various copies of said memory object in said memories according to a paging mechanism;
- marking (MRK1) all copies of said memory object (DP, DPc) in the corresponding memories (M1, M2) as read-only status;
- in case a considered thread (T1, T2) is trying to write (T1 WRT?, Tx WRT?) to the copy in the memory (M1, M2) accessible to said thread, marking (MRK2) all the other copies as inaccessible, and marking the copy of said threadas writable;
- returning control to said process so as to perform a write operation (WRT) to the copy in the memory (M1, M2) accessible to said thread such as to define a last updated copy of said memory object;
- performing an updating operation (UPD) by copying said memory object from the last updated copy to all the others copies (DPc), and returning all the copies to a read-only status (MRK1); and
- in case any other thread tries accessing a copy marked as inaccessible, temporarily suspending said other thread during said write operation (WRT), and subsequently resuming and completing access of the temporarily suspended thread to the updated copy when all the copies are returned to the read-only status (MRK1).

9. The method of managing memory according to anyone of claims 6 to 8, wherein the steps are performed by an operating system (OS) of the high-performance computing system (HPC).

10. A computer program product comprising program code means for performing the steps of the method of managing memory of any one of the claims 1 to 9 when said program code is executed by an operating system (OS) of a high-performance computing system (HPC).

11. A memory management unit integrated in a high-performance computing system (HPC) comprising a logical circuit for performing the steps of the method of managing memory of any one of the claims 1 to 8.
